# EUROPEAN PATENT SPECIFICATION

(11) **EP 2 374 722 B1**
(45) Date of publication and mention of the grant of the patent: **31.10.2018**
(21) Application number: 11386007.6
(22) Date of filing: 06.04.2011
(51) Int. Cl.: B65D 21/04, B65D 77/06, B65D 77/04, B65D 88/02

(54) **Plastic conical rectangular tank for packaging and transporting liquid products**
Rechteckiger konischer Behälter aus Kunststoff zum Verpacken und Transport von Flüssigkeiten
Conteneur rectangulaire conique en plastique pour l'emballage et transport de produits liquides

(30) Priority: 06.04.2010 GR 20100100216
(43) Date of publication of application: 12.10.2011
(73) Proprietor: Douralis, Christofillis, 54627 Thessalonoki (GR)
(72) Inventor: Douralis, Christofillis, 54627 Thessalonoki (GR)

(56) References cited:
- WO-A1-92/21575
- DE-A1- 2 638 238
- FR-A1- 2 397 340
- NL-C2- 1 021 273
- US-A- 5 375 741

## Description

The invention relates to a conical plastic rectangular container with watertight lid and capacity of 440 liters.

Until today all agricultural food products, which are liquids or preserved in liquids (brine or syrup), stored and transported in plastic or metal drums, with capacity from 100 liters up to 220 liters.

As example, some basic Mediterranean agricultural products (olives in brine, peppers in brine, vine leaves in brine, peach compote, syrup, olive oil, wine or vinegar, etc.) are stored and transported in plastic drums.

All plastic containers with bigger capacity, which are suitable for transporting food products, are shaped square or cylindrical and they are not watertight.

One such large container is disclosed by US5375741, in accordance to the preamble of claim 1. Furthermore WO92/21575 discloses a container for transporting liquids and solids in bulk. The biggest volumes of agricultural products are transported in bulk packaging.

The plastic barrels, due to their cylindrical shape, cannot be returned and reused by producers, because transport costs from the overseas (Europe, America, etc.) is very high.

Additionally because of the shape and quality of construction, it is not safe to stack them during storage or transport, for saving space and freight cost.

Similarly the same happens with all existing plastic tanks or any other packaging material.

For the handling of these cylindrical drums, people use exclusively hand tools which require physical strength, limiting the employment of women or feeble workers.

Because of these reasons hundreds of thousands of plastic drums are produced each year. When they are emptied they are dirty and it is impossible to reuse them. Consequently the use of plastic or metal drums is a great expense for the packaging cost.

Equally important is the environmental impact, since the raw material (polyethylene) is derived from petroleum and the empty drums are dirty and needs special recycling treatment.

The **advantages** of this invention are the following:
The transport and storage of agricultural products especially those kept in a liquid environment (olives, peppers, fruit juices, etc.) is safe and secure, in high capacity tank (400 liters), saving time during packaging, storage space, transportation and packaging cost.

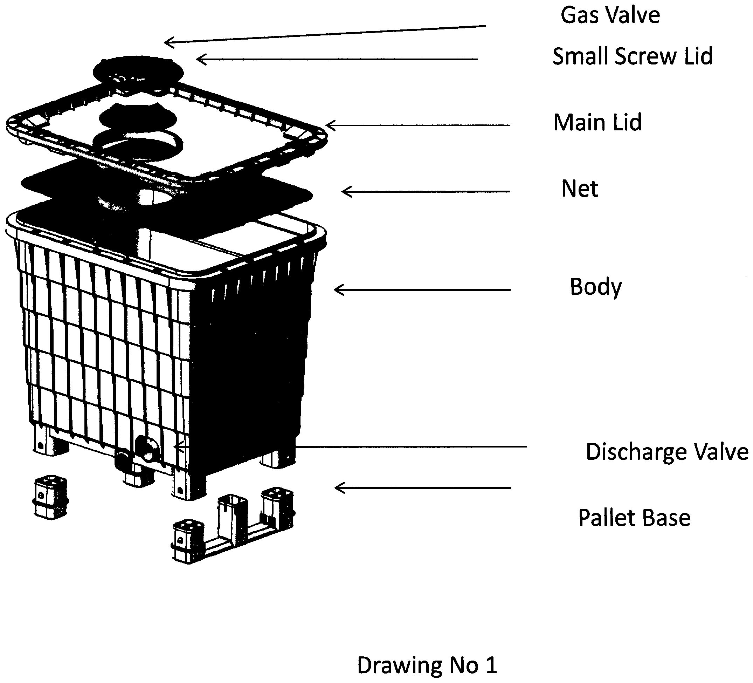

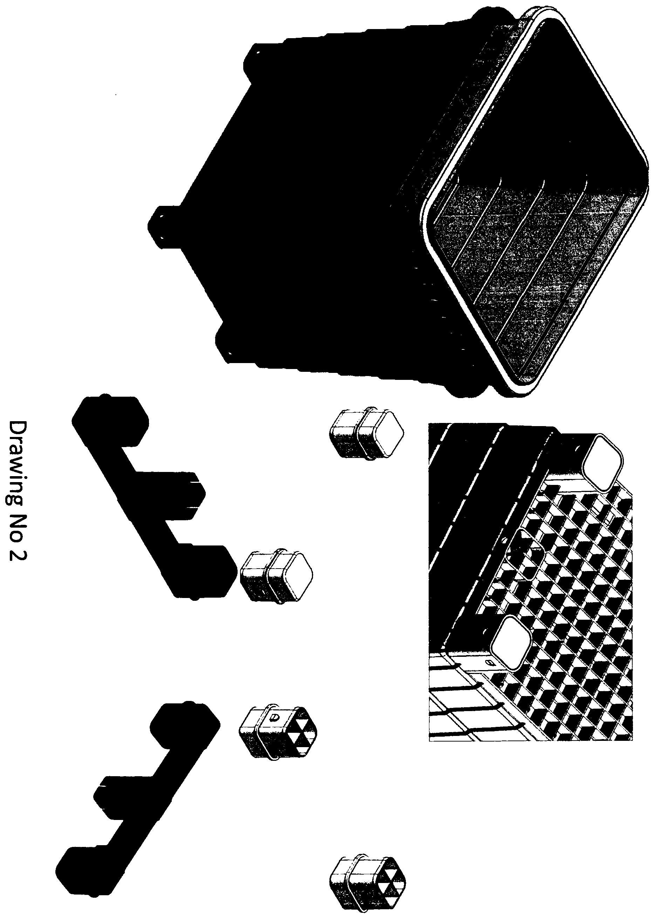

After emptying, because of the conical shape and the special design, the tanks are placed one inside the other (nesting) and stored, occupying minimal space for storage (Figure 2). Then the tanks can be returned back to the producer for reuse, with very low transport cost. So the producer does not have to constantly buy new barrels.

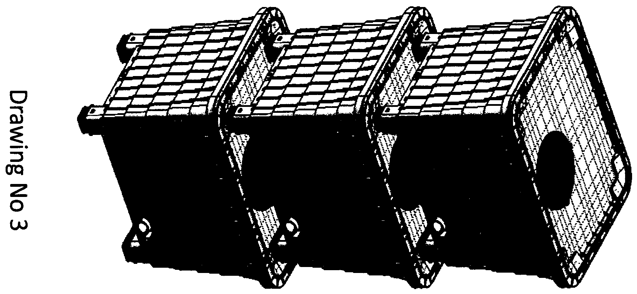

Because of the shape and construction of the cellular body of the tank, it is possible to stack (when is full), three tanks in storage (static) or two during the transport (dynamic), saving storage space and transportation costs (Figure 3).

The tank has a base designed like a palette (Figure 2) allowing the use of all the common mechanical equipment for handling and moving goods quickly and safely, regardless the physical strength of the user.

The base has detachable feet (Figure 2) which can be replaced when dirty.

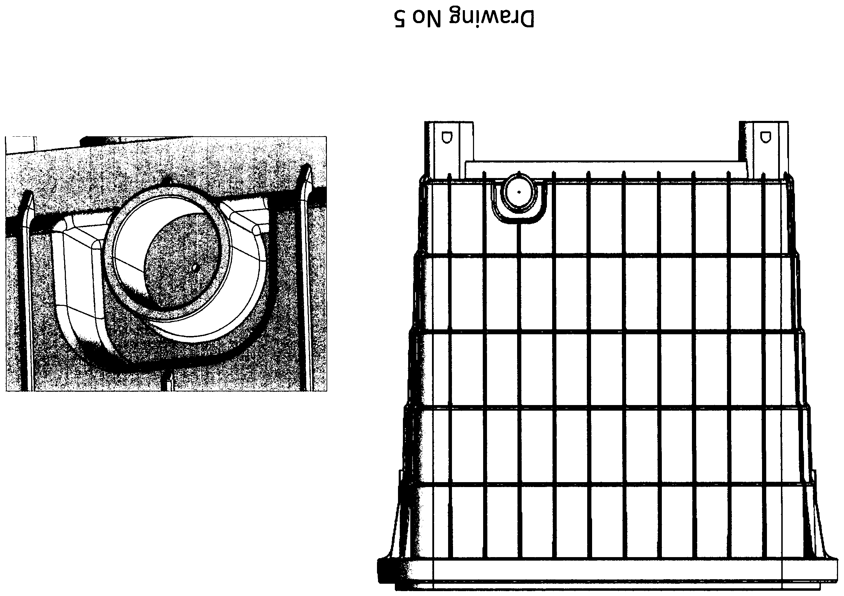

The container has a drainage valve (Figure 5) for easy emptying of the liquid (brine, syrup or oil), but also for easy cleaning.

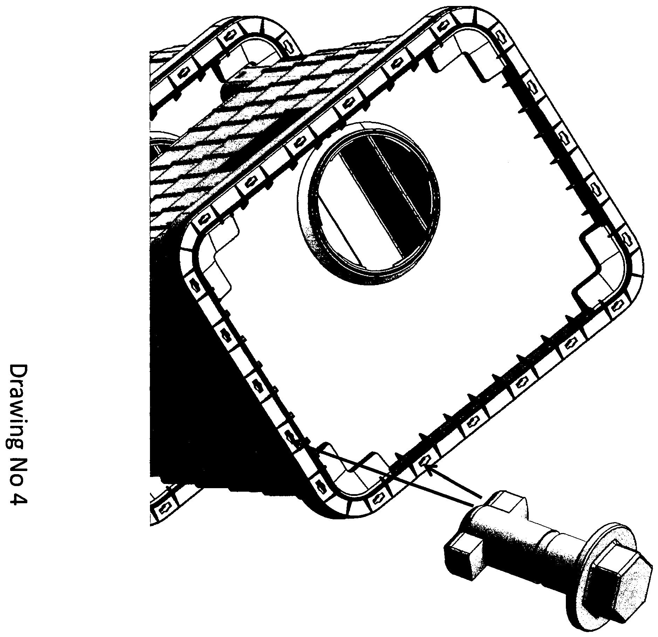

The main lid closes the tank with 22 special design screws (Figure 4) and rubber gasket to seal the top.

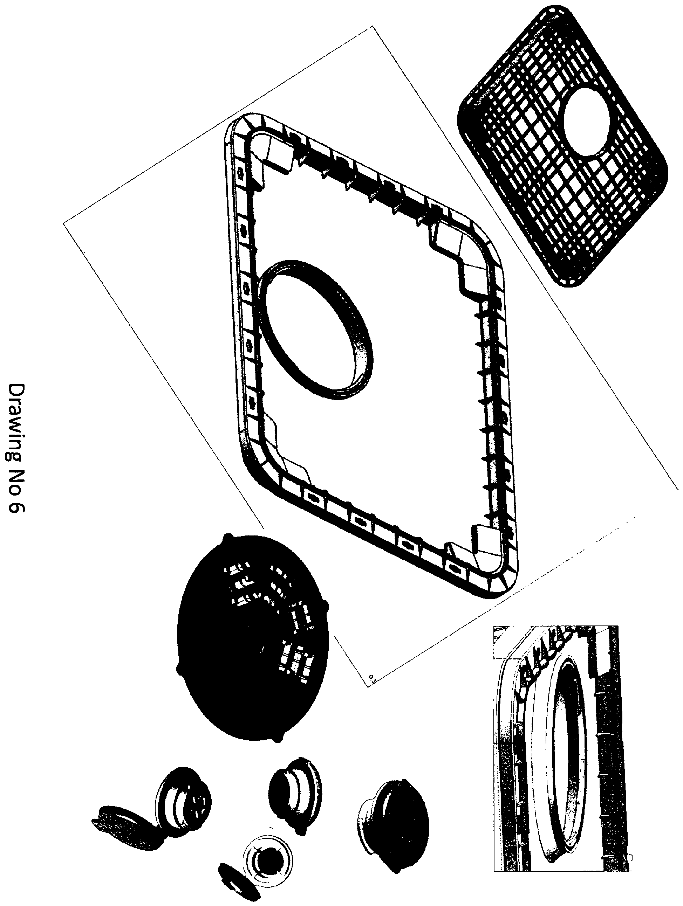

The main lid has a second round lid (Figure 6) which allows direct access to the contents of the tank and the filling of liquid or preservatives.

The second small lid has a valve (Figure 6), for the gas which is likely to be created as a result of natural fermentation, when storing food outdoors in summer.

The **basic characteristics** of a rectangular plastic conical tank are:
The nesting facility allows the user easily to put one inside the other and store the tanks using a very little space, or to return them to the producer of the goods, at very low cost.

The exterior design of the cellular body of the tank gives great strength and stability, when is full, making it extremely sturdy in order to obtain the stack of 3 tanks in storage, or 2 tanks during transport.

The main lid is designed so that the closure will be 100% watertight ensuring the safe preservation and transportation of products. The plastic screws in conjunction with the elastomeric gasket help to complete watertight sealing of the tank.

The specially designed bottom of the main lid, hold products in the liquid neutralizing the force of buoyancy.

The small lid allows easy and immediate control of the product, with the minimum contact to the external environment.

The base of the tank is pallet type. This design enables the user to use the common transportation tools for moving pallets (manually, electrically or gas), significantly reducing the time and cost of loading and unloading.

The major capacity of agricultural bulk products is stored outdoors. The heat in hot summer normally creates natural ferment, producing gas and decreasing the quality and the safety of the products.

The specially designed lid of the tank has gas valve in order to vent the gas and to maintain the product safely.

The shape of the bottom of the main lid is conical (from the sides toward the center) to keep constantly the products in the liquid which due to the buoyancy are forced up. This design minimizes the quantity of air which is locked inside.

The tank has a bottom drainage valve of 25,4 mm (1 inch) for fast and easy emptying of the liquid (brine, syrup, oil, etc.) and easy cleaning.

## Claims

1. A conical rectangular tank with watertight feature, constructed especially for the storage and transportation of food product comprising,
a main body in rectangular conical shape having a base surface with legs, four sidewalls extending in trapezoid shape upwardly and outwardly from the base surface, and an open rectangular top, wherein said base surface with said legs have an integrated pallet type configuration,
a main lid to close the open top of the main body, having a top surface, a bottom surface, a round opening for filling up the tank and a rim along the periphery of said main rectangular lid, wherein said main lid is attached to the open top of the main body with screws secured along the rim of said main lid,
**characterized by**:
a) a small round lid that fits in the round opening of the main rectangular lid comprising a rubber gasket around the periphery of the small round lid for a watertight seal of the opening of the small lid and a cap with a gas extraction valve to facilitate the outflow of the fermentation gases developed inside the tank, the small round lid being eccentrically positioned for providing access inside the tank, the upper rim of the round lid being designed in a higher level than the level of the main lid,
b) a sidewall of the main body adjacent to the base of the tank comprises a discharge opening equipped with a plastic drainage valve of 25,4 mm in order to empty the liquids inside the tank, and said legs of the base surface further comprise separately detachable and replaceable feet,
c) said main lid being provided with 22 plastic screws providing a watertight behavior,
d) the bottom of the base being provided with ribs,
e) said plastic screws in conjunction with an elastomeric gasket provide a watertight sealing to the tank and the top surface of the main lid comprises four sloping corners.

## Patentansprüche

1. Ein konischer echteckiger wasserdicht Behälter, der speziell zur Lagerung und Beförderung konstruiert wurde, besteht aus
Ein Hauptkörper in rechteckigen konischer Form mit vier Fuße Basis und vier Seitenwände, der von Basis an nach oben und äußerlich trapezförmig austreckt und ein offene rechteckige Spitze. Die oben genannte Basis und die oben genannte Fuße sind auf eine einheitliche Palette Form konstruiert, und
ein Hauptdeckel die offene Spitze des Hauptkörpers schließt. Hauptkörper besteht aus eine Oberfläche, eine Bodenfläche, eine runde Öffnung um den Behälter auszufüllen und ein Rand entlang des oben genannten rechteckigen Hauptdeckels, Der Deckel ist an der offenen Spitze des Hauptkörpers durch Schrauben gesichert, die entlang des Randes des Hauptdeckels gestellt sind. **gekennzeichnet durch**
a) ein kleiner rund Deckel, der an der runde Öffnung des rechteckigen Hauptdeckels anpasst, ausgerüstet mit-einer Gummidichtung um rund der Peripherie des kleinen rund Deckels damit die Öffnung des kleinen Deckels wasserdicht ist und eine Kappe mit Gas - Herausziehen Ventil um das Herausziehen des im Behälter durch Fermentation entwickelten Gas zu ermöglichen. Der kleine rund Deckel wurde exzentrisch installiert um Zugang zum innere des Behälters anzubieten. Der oben Rand des rund Deckels wurde höher als des Hauptdeckels gestellt
b) Auf eine Seitenwand des Hauptkörpers gibt es eine Entlassungsöffnung, die aus einem plastischen Drainage Ventil von 25,4 mm besteht. So können die Flüssigkeiten von dem Behälter entleeren worden. Die oben genannte Fuße der Bodenfläche sind abnehmbar und ersetzbar
c) Der oben genannte Deckel wurde mit 22 plastischen Schrauben ausgerüstet und wird so vollständig wasserdicht
d) Das Boden der Basis wird mit Rippen ausgerüstet
e) Die oben genannten plastischen Schrauben in Verbindung mit Gummidichtung bieten dem Behälter sowohl auf die Spitze als auch auf die vier ansteigenden Ecke vollständige Wasserdichtung an.

## Revendications

1. Un réservoir en plastique conique rectangulaire avec un couvercle étanche, spécialement fabriqué pour le stockage et le transport de produits alimentaires, y compris:
Une cellule principale en forme rectangulaire conique ayant une surface de la base avec des pieds, quatre parois que s'étendent en forme de trapèze vers le haut et vers l'extérieur et aussi un toit ouvert rectangulaire, dans laquelle la surface de la base avec les pieds susmentionnés dispose une configuration de palette,
Un couvercle centrale pour fermer le toit ouverte de la cellule principale, ayant une surface au plafond, une surface au fond, une ouverture ronde pour ajouter des liquides dans le fût et un anneau autour de la périphérie du couvercle central rectangulaire, dans lequel le couvercle est attaché au toit ouvert avec des vis sécurisés autour du couvercle,
**Caractérisé par**:
a) Un petit couvercle rond que s'emboîte à l'ouverture ronde du couvercle central rectangulaire composé par de joint en caoutchouc autour de la périphérie du petit couvercle central pour sécuriser l'étanchéité de l'ouverture du couvercle et aussi un robinet pour l'extraction du gaz pour faciliter la décharge des gazes résultants de la fermentation qui se produisent dans le couvercle: Le petit couvercle est placé au centre pour faciliter l'accès dans le fût, et l'anneau supérieur est placé en dessous du niveau du couvercle central,
b) Un paroi de la cellule centrale adjacent à la base du réservoir est compris par une ouverture pour la décharge avec un robinet de drainage en plastique de 25,4 mm, et aussi les pieds de la base de la surface son détachables et remplaçables,
c) Le couvercle central dispose 22 vis en plastique que sécurisent l'étanchéité
d) Le fond de la base est composé de joints
e) Les vis susmentionnées en plastique avec les joints en caoutchouc offre de l'étanchéité au réservoir et la surface du plafond du couvercle central est composée de quatre coins inclinés.
